# EUROPEAN PATENT SPECIFICATION

(11) **EP 0 794 029 B1**
(45) Date of publication and mention of the grant of the patent: **28.05.2003**
(21) Application number: 97101259.6
(22) Date of filing: 28.01.1997
(51) Int. Cl.: B23K 9/32

(54) **Attachment for welding torch**
Befestigung für einen Schweissbrenner
Fixation de torche de soudage

(30) Priority: 05.03.1996 IT VI960021 U
(43) Date of publication of application: 10.09.1997
(73) Proprietor: TRAFIMET S.P.A., 36020 Castegnero (VI) (IT)
(72) Inventor: Zigliotto, Giuseppe, 36023 Longare (VI) (IT)
(74) Representative: De Gregori, Antonella

(56) References cited:
- EP-A- 0 074 430
- DE-A- 2 419 652
- FR-A- 2 276 136
- NL-A- 6 402 615
- US-A- 4 582 979

## Description

The present invention relates to a connection system according to preamble of claim 1 and, more particularly, the female part of the attachment, of the type comprising a metal body provided with two or more electrical connectors, a connection for the gas supply and a stem for the connection of welding wire guiding devices, in which the said stem for the connection of the means of directing the wire is inserted into a hole formed in the said metal body and has a housing for the insertion of the relevant male connection present on the torch.

With this solution, it is possible to reduce significantly the length of the attachment in comparison to those already known, the length being almost halved, thus giving a substantial saving in both materials and labour, smaller dimensions and a reduction in the working time, while maintaining unaltered the resistance and the intensity of current which can be passed through the attachment.

In essence, the invention consists in a specific configuration of the parts which form the female part of the connector, so as to give the above-mentioned advantages in terms of use and practicality.

The invention relates to the field of welding and, in particular, refers to attachments which allow a welding torch to be connected to the body of the welding machine. At present standard type connectors are used, with a female part which is attached to the frame of the machine and which comprises a metal body, generally in the form of a cylinder made of brass or other suitable material, provided on the outside with a threading on which is fixed the male connection of a torch and inserted inside an insulating casing, usually made of plastics material, which is attached to the wall of the welding machine.

The invention relates to this "female" connector, that is that part which is fixed to the body of the welding machine..

In connectors currently in use, the female part is formed from a metal body which is generally cylindrical, for example of brass or copper, with a series of electrical contacts equipped with a suitable bushing, a connection for the gas supply and a stem with wire-guiding devices which leads to a housing in which is inserted the corresponding wire guide of the torch.

US-A-4.582.976 shows a connection system, according to preamble of claim 1, to be applied to a robot, comprising a metal body 101, with electrical contacts and a gas feeding attachment 115, in which the wire supply devices comprise a stem 126 inserted into a hole of body 101 at a first end thereof, a tube 141 inserted into the hole of the body at a second end thereof, and a wire support liner 156.

The aim of the invention is to propose a connector of the type described above, which is however lighter and smaller than those already known, easier and more economical to produce but which allows the connection of existing torches with standard attachments.

Over the past few years various configurations of attachment have been studied, all times to obtain a lighter connector of this type and above all, one which is more economical to produce. Therefore, in accordance with the first known solution, which is fairly widely distributed, the inside of the body of the female connection is made from plastics material, with the electrical contacts for the connection of the torch control cables being housed inside this.

The outside part of the body is instead formed from a metal box which is threaded on one part for connection to the torch and which has, on the opposite side, attachments for the cables supplying the welding current. However, this solution does not give the same results as attachments already known, as it significantly reduces the conductive cross-section, thus limiting the amperage which the attachment is able to conduct. Another known solution, which is also aimed at reducing the cost of the components, involves making the whole body of the attachment in plastics material and disposing in the body a metal box which forms the housing into which is inserted the wireguiding device of the torch.
The stem with the wire-guiding sheath is fixed on the opposite side of the box.

Although this solution is significantly more economic than the others, it has two disadvantages.

First, the cross-section of the metal part is reduced by a very significant measure, being practically limited to the box which forms an integral part of the stem, thus creating a limit to the welding current.

Moreover, the plastics thread is easily worn and subject to damage during impacts etc.

The aim of the present invention is to eliminate the above mentioned disadvantages by creating an attachment for welding torches (and in particular the female part of the connector) which, although retaining the same characteristics of electrical conductivity, practicality and safety as the known attachments, is more economical to produce, significantly smaller and lighter.

This aim is achieved by a connection system according to claim 1, in particular by forming the wire-guiding stem from a single piece with a box which forms the housing in which the wireguide on the torch is inserted, then inserting the stem with the box in a corresponding hole provided on the attachment.

In this way, it is possible to reduce the length of the attachment, the reduction in length being equal to the length of the thread which was provided on known attachments for screwing on the stem. In essence, it is possible to reduce the length of the connector almost by half in comparison with those known, with a resulting saving in materials, reduction in production time etc.

These and other advantages will become clear from the following detailed description, which is given by way of non-limitative example, with reference to the attached drawings in which:

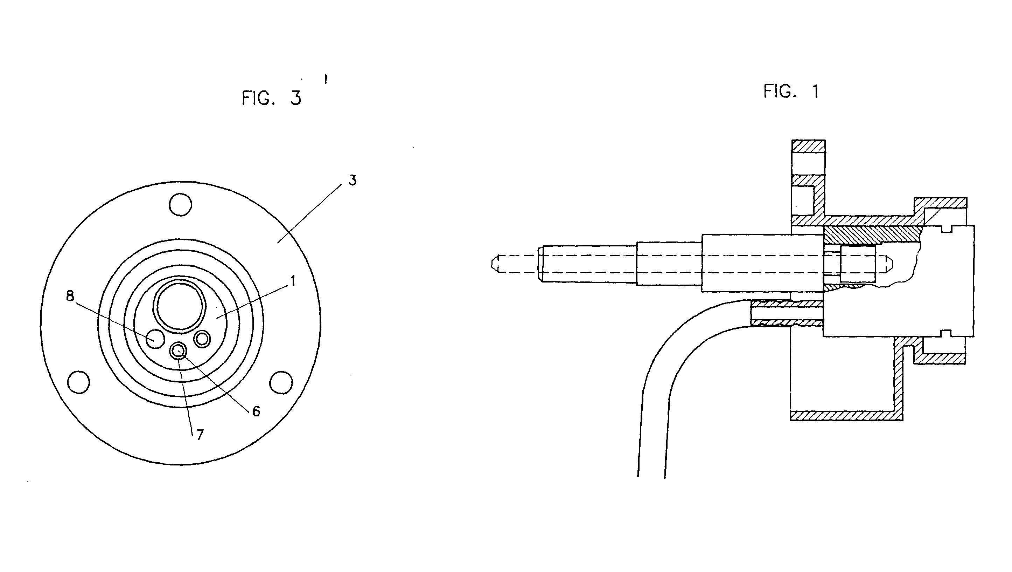

- figure 1 is a view of a connector of known type, shown to allow comparison with the solution according to the invention;
- figure 2 shows a partial cross-sectional view of an attachment according to the invention;
- figure 3 is a front view of the connector of a torch to be applied to the attachment according to the invention.

With reference to the drawings, the connector has a body 1, for example a cylindrical body made of brass, copper or other suitable conductive material, inserted inside a sleeve 2 with a flange 3 for fixing to the wall of the welding machine.

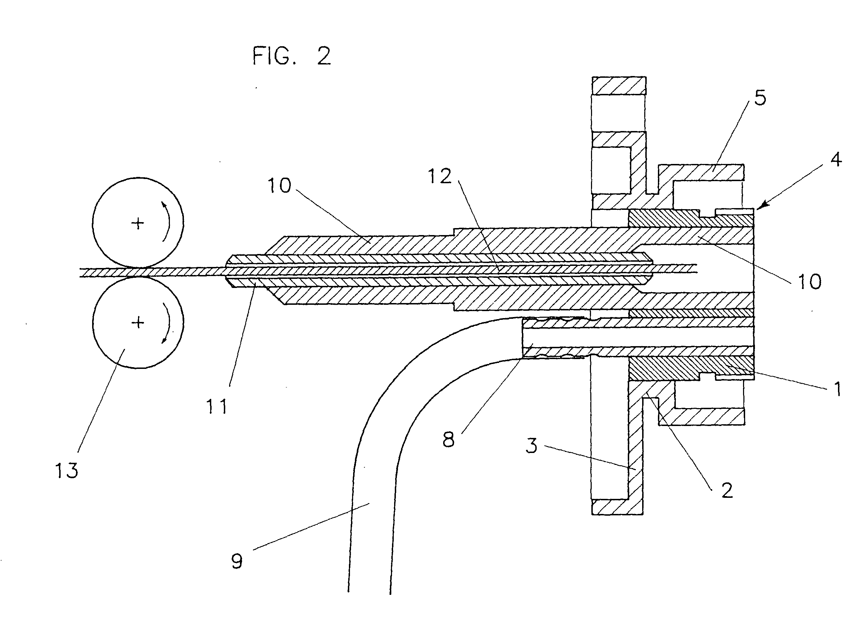

The front of the body 1 has an external thread 4 which allows the male connector of the torch to be attached and the dimension of the sleeve 3 is larger than that of this zone, so that it forms a type of protective cover 5 for the thread, which also provides insulation for the attachment. In the body 1 there is provided a series of holes in which are inserted (see figure 2) two or more electrical contacts 6 for the torch controls, each equipped on the outside with a bushing 7.

A hole 8 forms the housing in which is inserted the connection for the gas supply which is provided through a pipe 9 fixed to the back part of the attachment. In the body 1 there is then provided another hole in which is inserted a hollow stem 10 with a small pipe or capillary tube 11 for guiding the welding thread 12 which is supplied by rollers 13 or similar devices.

According to the invention, the diameter of the front part of the hole of the stem 10 increases in order to form a housing in which is inserted the corresponding wire-guide of the attachment present on the torch.

The stem 10 is forced inside the hole provided in the body 1.

With this configuration, both the production and assembly are simplified, as it is no longer necessary to provide a thread inside the body for the insertion of the stem or for other connections, it being necessary only to form a through hole and insert the stem 10.

As this also eliminates the need to provide a thread for the connection of the stem, the length of the body is significantly reduced, by approximately one half, with evident advantages both in terms of working time, as the length of the holes which the machines have to drill are halved, and in terms of reduced size and weight.

In addition, with this solution the metal cross-section of the body, through which the welding current is supplied, remains unchanged, thus allowing a significant saving without limiting the performance of the element.

An expert in the field could envisage different embodiments of the invention, for example by using various means to fix the stem inside the body 1 without exceeding the scope of the present invention as defined by claims.

## Claims

1. Connection system for a welding torch of the type comprising a body (1) in conductive material with a plurality of electrical contacts (6), a housing (8) for the connection of a gas supply, a hollow stem (10) **for the supply of welding wire** inserted into a hole in said body (1), and a wire-guide inserted in said stem (10) for the **guiding** of a **welding wire** supplied through said stem, a housing for the insertion of a wire-guiding device present on the torch is provided on the front of said stem (10), said housing is formed from a single piece with the said stem, **characterized in that** said stem is **force** inserted into a corresponding **through** hole formed in said body (1).

2. Connection system according to claim 1, **characterized in that** said stem (10) has an axial hole, the diameter of which is increased in relation to the front part of the stem, in order to form said housing for the insertion of wire guiding devices present on the torch.

## Patentansprüche

1. Verbindungssystem für einen Schweißbrenner mit einem Hauptteil (1) aus leitfähigem Material mit mehreren elektrischen Kontakten (6), einem Gehäuse (8) für die Verbindung einer Gaszufuhr, einem hohlen Schaft (10) für die Zufuhr von in eine Bohrung des Hauptteils (1) eingeführtem Schweißdraht und einer in dem Schaft (10) eingesetzten Drahtführung zum Führen eines durch den Schaft zugeführten Schweißdrahts, wobei ein Gehäuse zum Einsatz einer auf dem Brenner vorgesehenen Drahtführungseinrichtung an der Vorderseite des Schafts (10) vorgesehen ist und wobei das Gehäuse an einem Stück mit dem Schaft ausgebildet ist, **dadurch gekennzeichnet, dass** der Schaft kraftschlüssig in eine entsprechende durchgehende Bohrung in dem Hauptteil (1) eingesetzt ist.

2. Verbindungssystem nach Anspruch 1, **dadurch gekennzeichnet, dass** der Schaft (10) eine axiale Bohrung aufweist, deren Durchmesser relativ zum Vorderteil des Schafts vergrößert ist, um das Gehäuse zum Einführen der auf dem Brenner vorhandenen Drahtführungseinrichtungen zu bilden.

## Revendications

1. Système de raccordement pour chalumeau soudeur du type comprenant un corps (1) en matériau conducteur avec une pluralité de contacts électriques (6), un boîtier (8) permettant de brancher une alimentation en gaz, une tige creuse (10) permettant d'apporter un fil de soudure inséré dans un trou dudit corps(1), et un guide-fil inséré dans ladite tige (10) destiné à guider un fil de soudure apporté à travers ladite tige, un boîtier permettant d'insérer un dispositif guide-fil présent sur le chalumeau est prévu à l'avant de ladite tige (10), ledit boîtier est formé d'une seule pièce avec ladite tige, **caractérisé en ce que** ladite tige est insérée de force dans un trou traversant correspondant formé dans ledit corps (1).

2. Système de raccordement selon la revendication 1, **caractérisé en ce que** ladite tige (10) comporte un trou axial, dont le diamètre est accru par rapport à la partie avant de la tige, de manière à former ledit boîtier permettant d'insérer un dispositif guide-fil présent sur le chalumeau.
